Europäisches Patentamt

European Patent Office

Office européen des brevets

(11) Publication number : **0 511 770 A1**

(12) **EUROPEAN PATENT APPLICATION**

(21) Application number : **92303539.8**

(22) Date of filing : **21.04.92**

(51) Int. Cl.⁵ : **F02C 7/14, F02C 7/18**

(30) Priority : **22.04.91 US 688402**

(43) Date of publication of application :
**04.11.92 Bulletin 92/45**

(84) Designated Contracting States :
**DE FR GB IT**

(71) Applicant : **GENERAL ELECTRIC COMPANY**
**1 River Road**
**Schenectady, NY 12345 (US)**

(72) Inventor : **Miller, Franklin Elliott**
**1762 Lockbourne Drive**
**Cincinnati, Ohio 45240 (US)**
Inventor : **Segal, Steven Mark**
**191 Lafayette Circle**
**Cincinnati, Ohio 45220 (US)**
Inventor : **Vermejan, Alexander Emam**
**1390 Firethorn Drive**
**Mason, Ohio 45040 (US)**

(74) Representative : **Lupton, Frederick**
**LONDON PATENT OPERATION, G.E.**
**TECHNICAL SERVICES Co. INC., Essex**
**House, 12/13 Essex Street**
**London WC2R 3AA (GB)**

(54) **Heat exchanger system.**

(57)    An air/fluid heat exchanger is in direct fluid connection with the compressor surge bypass air controlled by the booster bypass door system (30) located between the booster (20) and core engine compressor stages (24) of a fan-jet gas turbine engine in order to eliminate a separate heat exchanger inlet control valve thereby reducing the operating complexity and number of parts of the engine as well as reducing the size of the heat exchanger core so as to be able to locate the heat exchanger within the engine.

Fig. 1

EP 0 511 770 A1

Jouve, 18, rue Saint-Denis, 75001 PARIS

## BACKGROUND OF THE INVENTION

### Field of the Invention

This invention relates to a fan-jet gas turbine engine air/fluid heat exchange systems and particularly to air/oil heat exchangers whose cooling airflow is controlled by the engine surge bleed system.

### Description of Related Art

Gas turbine engines employ many accessories requiring cooling. Two methods of cooling commonly used are air/liquid, particularly air/oil, heat exchangers and fuel/oil heat exchangers. Other fluids such as hydraulic fluid may require temperature conditioning, either cooling or heating, and may also employ air or fuel as a cooling or heating sink source. The plumbing and control of such fluid temperature conditioning systems are complicated, weighty, and expensive, therefore an object of concern to aircraft engine designers.

Fan jet engines such as the General Electric CF6-80 series of engines have in series relationship a fan, a booster, and a core engine compressor whereby a portion of the air passing through the fan is ducted to the booster and then the core engine compressor. In order to match the inlet airflow of the core engine compressor to its flight operational requirements and to prevent compressor stall a booster variable bypass valve (VBV) is provided in the form of a booster bypass duct having an inlet between the booster and the core engine compressor and an outlet to the fan duct. Opening and closing of the booster bypass duct is conventionally provided by a circumferentially disposed plurality of pivotal doors operated by a single unison ring powered by one or more fuel powered actuators. Bellcrank linkages operably connect the pivotal bypass doors to the unison ring. The operation of the VBV is scheduled by the engine controller, either a mechanical or digital electronic type may be used.

An example of the prior art, U.S. Patent 4,546,605 entitled "Heat Exchange System" by Mortimer et al, discloses an apparatus for obtaining cooling air for use in the heat exchanger from a surge bypass bleed that retains a conventional heat exchanger inlet control valve and associated plumbing, structure, and controls for its operation. A drawback common to the prior art is that a fully active heat exchanger inlet control valve, such as valve 50 in the Mortimer patent, is used to control cooling air to the heat exchanger thereby adding to the weight, complexity, and cost of the heat exchanger system.

## SUMMARY OF THE INVENTION

In one aspect, the invention provides an aircraft gas turbine engine heat exchange apparatus comprising :

an air/fluid heat exchanger operable to receive cooling air to cool another fluid,

a cooling air source in fluid supply communication with said air/fluid heat exchanger,

a cooling air source variable valve disposed between said cooling air source and said air/fluid heat exchanger operable to modulate the flow rate of cooling air to said air/fluid heat exchanger and controlled by a variable booster valve (VBV) system.

In another aspect, the invention provides an aircraft gas turbine engine heat apparatus for an engine having a variable bypass valve system including a plurality of circumferentially disposed variable bypass valves disposed in respective booster bypass duct inlets to the core engine airflow passage between the booster section and the core engine compressor section and a booster bypass duct outlet to the fan duct, said heat exchange apparatus comprising :

an air/fluid heat exchanger disposed in a booster bypass duct outlet.

The present invention provides a means to supply an air/fluid heat exchanger with cooling air that directly controlled or scheduled by the booster variable bleed valve (VBV) and its respective control system.

In the preferred embodiment of the invention an air/oil heat exchanger for cooling oil, such as for an integrated drive generator (IDG), is supplied and controlled by a VBV door and system that schedules variable bypass flow around the core engine, also referred to as the high pressure compressor, and cooling air to the heat exchanger. A more particular embodiment has the air/oil heat exchanger disposed in the outlet of one of a plurality of booster bypass ducts that are circumferentially disposed around the engine.

## ADVANTAGES

Among the advantages provided by the apparatus is the elimination of separate heat exchanger inlet control valve and its associated control system and plumbing that would otherwise add weight, complexity, and cost to the engine's heat exchanger system.

## BRIEF DESCRIPTION OF THE DRAWINGS

The foregoing aspects and other features of the invention are explained in the following description, taken in connection with the accompanying drawings where:

FIG. 1 is a partial view, partly in perspective and partly in schematic illustrating a VBV used to control the cooling air to an air/oil heat exchanger of an oil cooling system.

FIG. 2 is a partial view, partly in section and partly in perspective illustrating a second embodiment of the present invention.

FIG. 3 is a graph that depicts a typical schedule of an aircraft gas turbine engine VBV.

## DETAILED DESCRIPTION OF THE INVENTION

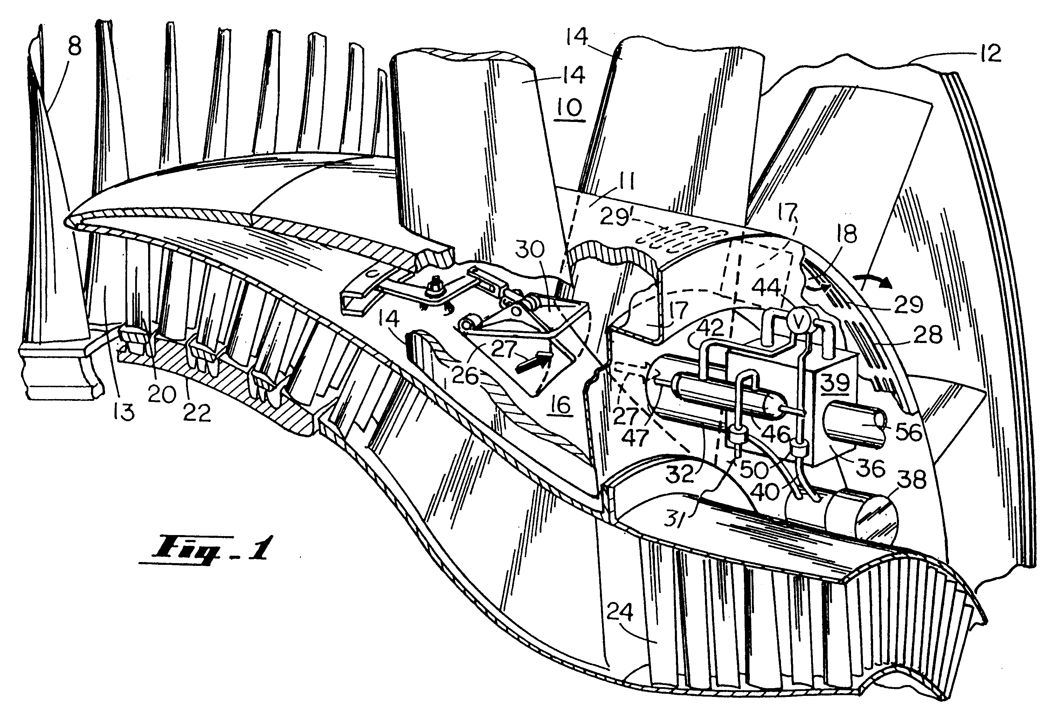

This invention is specific to a fan-jet engine, particularly, but not limited thereto to the dual spool axial flow type exemplified by the GE CF6 and CFM series of engines by General Electric, the assignee of this patent application. Illustrated in FIG. 1 is part of such an engine having a fan 8 that pressurizes and feeds air to a fan bypass duct 10 disposed between inner fan case 11 and outer fan case 12. A booster 20 located at a forward portion of core engine flow path 13 rotates together with fan 8 on a low pressure shaft 22 driven by a conventional low pressure turbine (not shown) and further compresses air that is then ducted to a conventional core engine compressor 24.

A circumferentially disposed plurality of booster bypass paths 16 are radially disposed between core engine flow path 13 and fan bypass duct 10 employing fan struts 14 as sidewalls and a radially outwardly disposed outlet plenum 18. A bypass path outlet 28 generally shown as circumferentially segmented rows of slots 29 disposed in inner fan case 11 forms the outlet from plenum 18. A booster air inlet 26 between booster 20 and core engine compressor 24 in core engine flow path 13 and is controlled by the engine's VBV system as illustrated by a VBV door 30 which controls and schedules booster bypass air 27.

As shown in FIG 1. pivotal VBV door 30 is disposed in booster bypass inlet 26 and is operable to pivot through a variable angle A in order to vary the amount of flow passing through cooling air chamber 16 and is the same or similar to VBV's that are conventionally circumferentially disposed in respective conventional booster bypass flow paths around the engine. Angle A and hence the flow rate of booster bypass air 27 is controlled by a VBV control system (not shown) as is conventionally known and used in the art such as on the above exemplary engines.

The present invention employs the VBV system to provide booster bypass air 27 for use as heat exchanger cooling air in a oil cooling system generally shown at 31 that provides oil cooling for an exemplary IDG generator 38. A heat exchanger cooling air flowpath makes use of a booster bypass path 16 by eliminating its bypass path outlet illustrated by segmented rows of slots 29′ shown as dashed lines and blocking direct flow communication to plenum 16 by blocker walls 17 in conjunction with fan struts 14.

An air/oil cooler 36 receives oil through an air/oil cooler oil inlet line 40 from IDG 38 that is to be cooled by cooling air received from bypass path 16 through a cooling air duct 32. Oil exits air/oil cooler 36 through an oil outlet line 42. A cold oil bypass line and valve 44 is disposed between oil inlet line 40 and oil outlet, line 42 when cooling from air/oil heat exchanger 36 in not required.

A conventional the of fuel/oil heat exchanger 46 is in serial oil flow relationship with air/oil heat exchanger 36 such that the fuel/oil heat exchanger provides heat exchange between oil flow circuit generally shown as 39 and fuel flow 47 at all times during engine operation. Heat exchange between booster air 27 and oil flow circuit 39 essentially occurs when VBV 30 is open and at a rate controlled by the VBV scheduling. Effluent cooling air from air/oil heat exchanger 36 is discharged through the discharge line 56, and since it is cooler than other parts of the engine, it may be utilized for further cooling or otherwise discharged overboard.

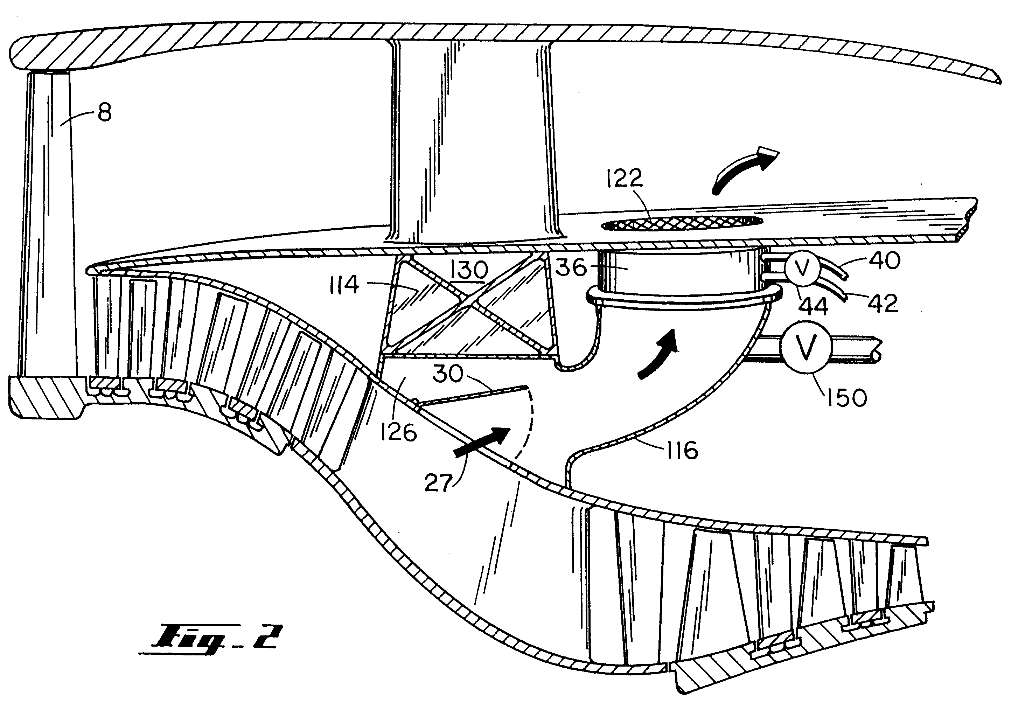

An alternative embodiment shown in FIG. 2 provides an air/oil heat exchanger 36 is disposed in a booster bypass duct 116 at its fan duct outlet 122 and that has its cooling air modulated or scheduled by the VBV system using VBV 30 disposed in an individual bypass air chamber 126 of bypass duct 116 in a manner similar to the embodiment shown in FIG. 1. A typical engine may have 10 booster bypass ducts 116 that have bypass air 27 supplied to it by VBV 30. Circumferentially disposed booster bypass ducts 116 may include, if desired, through openings 130 in fan frame struts 114 in order to provide cross-talk between the ducts 116 to dampen out low and high frequency pressure variations. An optional emergency valve 150 may be provided to use fan cooling air on the rare occasion it may be needed to provide air/oil cooling when VBV is closed.

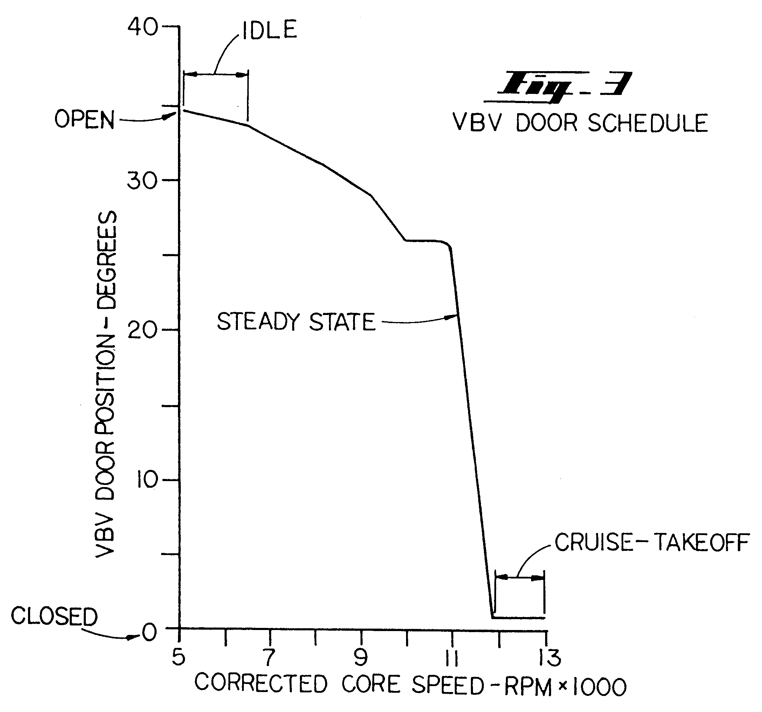

FIG. 3 illustrates a typical booster door 30 schedule by showing its opening angle as a function of corrected core speed which illustrates the airflow schedule through a VBV. Airflow supply through VBV 30 at low speed and part power is required because the corresponding airflow capacity of core engine or high pressure compressor 24 at the same engine operating condition is less than the air discharged by booster 20. This characteristic of the engine provides the source of cooling air for heat exchanger 36 at idle and part power.

The scheduling of VBV 30 determines the relative cooling air flow rate to air/oil heat exchanger 36 from which air/oil heat exchanger 36 and fuel/oil heat exchanger 46 may be sized. This scheduling matches the scheduling of engine fuel flow such that when VBV 30 is full open at idle and bypass airflow is high the engine fuel flow is low. At cruise to takeoff VBV is relatively closed and airflow is reduced to near zero while fuel flow is high. Thus, at idle power, the generator heat is rejected to the bypass air while at cruise to takeoff power the generator heat is rejected to the fuel through fuel/oil heat exchanger 46 of FIG. 1.

While the preferred embodiment of our invention has been described fully in order to explain its principles, it is understood that various modifications or alterations may be made to the preferred embodiment without departing from the scope of the invention as set forth in the appended claims.

## Claims

1. An aircraft gas turbine engine heat exchange apparatus comprising :

   an air/fluid heat exchanger (36) operable to receive cooling air (27) to cool another fluid,

   a cooling air source (20,24,26) in fluid supply communication with said air/fluid heat exchanger,

   a cooling air source variable valve (30) disposed between said cooling air source and said air/fluid heat exchanger operable to modulate the flow rate of cooling air to said air/fluid heat exchanger and controlled by a variable booster valve (VBV) system.

2. An aircraft gas turbine engine heat apparatus for an engine having a variable bypass valve system including a plurality of circumferentially disposed variable bypass valves (30) disposed in respective booster bypass duct inlets (26) to the core engine airflow passage between the booster section (20) and the core engine compressor section (24) and a booster bypass duct outlet (28) to the fan duct, said heat exchange apparatus comprising :

   an air/fluid heat exchanger (36) disposed in a booster bypass duct outlet.

3. An aircraft gas turbine engine heat exchange apparatus as claimed in Claim 1 or 2 further comprising a fuel/fluid heat exchanger (46) in serial fluid flow communication with said air/fluid heat exchanger.

4. an aircraft gas turbine engine heat exchange apparatus as claimed in any preceding claim further comprising a fluid bypass valve (44) disposed between a fluid inlet and fluid outlet of said air/fluid heat exchanger for bypassing fluid around said air/fluid heat exchanger.

5. An aircraft gas turbine engine heat exchange apparatus as claimed in any preceding claim wherein said fluid is oil from an oil cooled apparatus.

6. An aircraft gas turbine engine heat exchange apparatus as claimed in any of Claims 1 to 4 wherein said fluid is oil from an oil cooled integrated drive generator.

7. An aircraft gas turbine engine heat exchange apparatus as claimed in Claim 1 wherein said cooling air source variable valve is a variable booster valve of said VBV system.

Fig. 1

EP 0 511 770 A1

_Fig_2

EP 0 511 770 A1

Fig. 3
VBV DOOR SCHEDULE

IDLE

STEADY STATE

CRUISE−TAKEOFF

OPEN

CLOSED

VBV DOOR POSITION − DEGREES

40

30

20

10

0

CORRECTED CORE SPEED − RPM × 1000

5    7    9    11    13

**European Patent Office**

# EUROPEAN SEARCH REPORT

Application Number

EP 92 30 3539

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | US-A-4 546 605 (MORTIMER) <br> * column 2, line 47 - column 3, line 5; figure 2 * | 1,2 | F02C7/14 <br> F02C7/18 |
| | --- | | |
| A | US-A-3 080 716 (CUMMINGS) <br> * column 2, line 72 - column 3, line 35; figure 1 * | 1,3 | |
| | ----- | | |

**TECHNICAL FIELDS SEARCHED (Int. Cl.5 )**

F02C

The present search report has been drawn up for all claims

| Place of search | Date of completion of the search | Examiner |
|---|---|---|
| THE HAGUE | 28 JULY 1992 | SERRANO GALARRAGA J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)